(19) Europäisches Patentamt

European Patent Office

Office européen des brevets

(11) **EP 1 190 768 A1**

(12) **EUROPÄISCHE PATENTANMELDUNG**

(43) Veröffentlichungstag:
   **27.03.2002   Patentblatt 2002/13**

(51) Int Cl.⁷: **B01J 23/38**, B01J 23/46,
   B01J 35/10, B01J 37/00

(21) Anmeldenummer: **00120894.1**

(22) Anmeldetag: **26.09.2000**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(71) Anmelder: **Degussa AG**
   **40474 Düsseldorf (DE)**

(72) Erfinder:
   • **Hemme, Ina, Dr.**
     **63450 Hanau (DE)**
   • **Katusic, Stipan**
     **65779 Kelkheim (DE)**
   • **Auer, Emmanuel, Dr.**
     **60528 Frankfurt a.M. (DE)**
   • **Gross, Michael**
     **60385 Frankfurt a.M. (DE)**

(54) **Edelmetallkatalysator**

(57)   Edelmetallkatalysator mit

a) oxidischer makroporöser Phase

b) nanodisperser Phase an Edelmetalloxid-Kristalliten

c) Partikelgrößenverteilung zwischen 0,5 und 50 nm

d) Edelmetallgehalt von 0,1 bis 80 Gew.-%

wird hergestellt durch Flammenpyrolyse von wässriger Lösung von Edelmetallsalzen und Salzen des Trägermaterials.

Der Edelmetallkatalysator kann zur Hydrierung von organischen Verbindungen eingesetzt werden.

EP 1 190 768 A1

**Beschreibung**

Die Erfindung betrifft einen Edelmetallkatalysator, ein Verfahren zu seiner Herstellung sowie seine Verwendung.

Es ist bekannt, selektive Hydrierungen bei der Herstellung von Zwischenstufen für Agrochemikalien, Pharmazeutika und Feinchemikalien durchzuführen. Dabei werden funktionelle Gruppen hydriert, wie beispielsweise Nitroverbindungen zu den entsprechenden Aminen, C-C-Mehrfachverbindungen zu entsprechenden Aliphaten, aromatische Ringverbindungen zu Cycloaliphaten oder aliphatische Carbonylverbindungen zu den entsprechenden Alkoholen. Für diese Hydrierreaktionen werden hohe Katalysatoraktivitäten und Selektivitäten bei möglichst milden Reaktionsbedingungen (niedriger Druck, niedrige Temperaturen) angewendet.

Es ist bekannt, daß sich geträgerte Edelmetallpulverkatalysatoren neben Raney® -Nickel-Katalysatoren und geträgerten Übergangsmetallkatalysatoren als besonders geeignete Systeme für katalytische Hydrierungen erwiesen haben. Die Hydrieraktivität hängt dabei von der Größe der geträgerten Edelmetallkristallite, ihrer spezifischen Metalloberfläche, der Metalldispersion auf einem Träger und der Verteilung im Trägerkorn ab. Als Trägermaterialien werden Kohlenstoff, Aluminiumoxid, Siliziumdioxid, Calciumcarbonat oder andere Metalloxide, beziehungsweise Mischoxide eingesetzt.

Für bestimmte Hydrierreaktionen ist die Verwendung oxidischer Trägermaterialien von Vorteil. Hergestellt werden die bekannten Edelmetallpulverkatalysatoren durch Suspendieren des Trägers in wässrigen oder organischen Solventien, Imprägnierung, Fällung und/oder Hydrolyse der Edelmetallverbindungen und gegebenenfalls sich anschließende Reduktion in Suspension oder - nach Abtrennen durch Filtration und anschließender Trocknung - durch direkte Wasserstoff- beziehungsweise Formiergasreduktion bei unterschiedlichen Temperaturen. Manchmal werden die Katalysatoren nach ihrer Herstellung auch getrocknet und/oder thermisch behandelt. Bei der bekannten Synthese von Edelmetallpulverkatalysatoren sind jedoch bezüglich der nasschemischen Präparation in Suspension durch beispielsweise Stofftransportlimitierung, Adsorptions- und Desorptionsgleichgewichte sowie unterschiedliche Fällungs-und Hydrolysegeschwindigkeiten der Steigerung der Aktivität von geträgerten Edelmetallkatalysatoren Grenzen gesetzt.

Ein bekanntes Verfahren zur Herstellung von feinen Edelmetallpulvern durch Sprühpyrolysetechnik wird in der EP-A 0 591 881 beschrieben. Dabei wird eine Lösung einer thermisch zersetzbaren Edelmetallverbindung oder eines Gemisches solcher Verbindungen in einem flüchtigen Lösungsmittel in ein Aerosol überführt, dieses in einem inerten Trägergas in einem Pyrolysereaktor bei einer Temperatur oberhalb der Zersetzungstemperatur der Edelmetallverbindung(en) und unterhalb des Schmelzpunktes des Edelmetalls oder der Edelmetallegierung behandelt und anschließend das gebildete feinteilige Metall oder die Metallegierung vom Trägergas abgetrennt.

Der Pyrolysereaktor kann gemäß EP-A 0 593 167 auch bei einer Temperatur oberhalb des Schmelzpunktes des Edelmetalls oder der Edelmetallegierung betrieben werden.

Bei dem bekannten Verfahren der Flammenpyrolyse wird das Aerosol aus feinsten Tröpfchen einer Lösung oder Suspension in einen Flammenreaktor eingespeist, beispielsweise in eine Knallgasflamme gemäß J. Chem. Soc. Japan (1987), Vol. 12, S. 2293-2300, oder in die Flamme eines Flammenreaktors gemäß DE 195 45 455, in welchem der Wasserstoff mit der Umgebungsluft verbrennt. Der Vorteil der in einem Flammenreaktor gewonnenen Edelmetallpulver ist in ihrer sehr hohen Gleichmäßigkeit bezüglich der Zusammensetzung und in ihrer sehr gleichmäßigen Form zu sehen. Zusätzlich wird ein sehr enges Kornspektrum erzeugt.

Nach der Patentanmeldung EP 0 845 505 A2 werden Pigmente mittels Flammenpyrolyseverfahren erzeugt. Dabei wird ein feinverteiltes Edelmetall auf einem oxidischen oder silikatischen Träger hergestellt. Solche Pigmente lassen sich gewinnen, indem die in ein Aerosol zu überführende Lösung außer einer Edelmetallverbindung zusätzlich eine oder mehrere oxid- oder silikatbildende Vorstufen erhält. Im Pyrolysereaktor bilden sich aus diesen Vorstufen oxidische oder silikatische Trägerpartikel, mit auf oder in den Teilchen feinst verteilten Partikeln Edelmetall oder Edelmetalllegierung. Gemäß einer weiteren Alternative lassen sich geeignete trägergebundene Katalysatoren für das gattungsgemäße Verfahren auch dadurch gewinnen, dass man dem Flammenpyrolysereaktor oder einem durch ein elektrisches Plasma und/oder induktives Plasma beheizten Reaktor ein Aerosol zuführt, dessen feinste Tröpfchen außer einer oder mehreren gelöstem Edelmetallverbindungen das ungelöste Trägermaterial in feinstteiliger Form enthalten. Bei dieser Ausführungsform schlagen sich auf der Oberfläche der Trägerpartikel die katalytisch wirksamen Edelmetallpartikel nieder und werden darauf fest fixiert.

Diese Ausführungsform wird in der DE 198 21 144.9 beschrieben, und der Inhalt dieses Dokuments wird in die Offenbarung der vorliegenden Anmeldung einbezogen.

In der Veröffentlichung Applied Catalysis A: General 172 (1998), 351-358 wird beschrieben, dass ein Ru/ $Al_2O_3$-Katalysator hergestellt wird, indem eine $Al(NO_3)_3$x9$H_2O$ und $RuCl_3$x3$H_2O$-Lösung hergestellt, mittels Ultraschalltechnologie zerstäubt und anschließend innerhalb einer Sekunde in einem Heißwandreaktor zum Katalysator umgesetzt wird. Dabei entstehen Produkte, in denen das $Al_2O_3$ in der $\alpha$-Form vorliegt, mit einer BET-Oberfläche von > 20 m$^2$/g. Die katalytische Aktivität dieser Produkte ist bei Hydrierreaktionen ca. 2-fach höher als die der aufgefällten Standardprodukte.

Es ist somit Aufgabe der vorliegenden Erfindung, einen geträgerten edelmetallhaltigen Katalysator herzustellen, der in der Hydrierung bestimmter funktioneller Gruppen eine gegenüber dem Stand der Technik deutlich erhöhte Aktivität besitzt.

Gegenstand der Erfindung ist ein Edelmetallkatalysator, welcher gekennzeichnet ist durch

a) oxidische makroporöse Phase

b) nanodisperse Phase an Edelmetalloxid-Kristalliten mit einer Größe von kleiner 50 nm

c) Partikelgrößenverteilung zwischen 0,5 und 80 nm

d) Edelmetallgehalt von 0,1 bis 80 Gew.-% an Platin, Palladium, Ruthenium, Iridium und/oder Rhodium und/oder Kombination dieser Elemente.

In einer Ausführungsform der Erfindung kann der Edelmetallkatalysator als zusätzliche Dotierungselemente Fe, Sn, V, Cr, Ti, Mn, Co, Ni, Cu und/oder Bi in einer Konzentration von 0,1 bis 50 Gew.-%, bezogen auf die auf dem Katalysator enthaltende Edelmetallmenge, enthalten.

In einer Ausführungsform der Erfindung kann als nanodisperse Phase Ruthenium nanodispers auf/in der oxidischen makroporösen Phase Aluminiumoxid, Siliziumdioxid und/oder Titandioxid in einer Oxidationsstufe zwischen +4 und +8 vorliegen.

In einer bevorzugten Ausführungsform der Erfindung kann die oxidische makroporöse Phase $\alpha$-Al$_2$O$_3$ sein.

Ein weiterer Gegenstand der Erfindung ist ein Verfahren zur Herstellung des erfindungsgemässen Edelmetallkatalysators, welches dadurch gekennzeichnet ist, dass man eine wässrige Lösung eines Edelmetallsalzes und des Salzes des Trägermaterials zerstäubt und die entstandenen Tröpfchen pyrolysiert.

Erfindungsgemäß kann beispielsweise ausgehend von den Nitraten des Aluminiums und Rutheniums durch ein spraypyrolytisches Verfahren eine Edelmetall enthaltende, katalytisch wirksame Komponente (Edelmetallkatalysator) hergestellt werden, die auf Al$_2$O$_3$ geträgerte Rutheniumkristallite enthält.

Die Herstellung des Edelmetallkatalysators kann mittels der bekannten Sprühpyrolysetechnik oder der Flammenpyrolysetechnik erfolgen.

Es konnte nun überraschender Weise gefunden werden, dass RuO/Al$_2$O$_3$-Katalysatoren mit BET-Oberflächen $\leq$ 10 m$^2$/g, die in einem Flammenreaktor mit H$_2$/O$_2$-Flamme hergestellt werden und eine Verweilzeit $\geq$ 1,9 sec im Flammenrohr haben, Aktivitäten (ml H$_2$/min.xg; Aceton) aufweisen, die 2- bis 5-fach höher sind als die der bekannten Standardkatalysatoren.

Die erfindungsgemäßen Edelmetallkatalysatoren zeichnen sich durch eine sehr hohe Aktivität bei der katalytischen Hydrierung von unterschiedlichen organischen Verbindungen aus. So weist beispielsweise ein erfindungsgemäßer RuO$_x$/Al$_2$O$_3$-Katalysator mit einer Edelmetallbeladung von 5 Gew.-% eine 2 bis 3-fach höhere Hydrieraktivität in der Niederdruckhydrierung von aliphatischen Carbonylverbindungen, wie zum Beispiel einer Carbonylverbindung wie Aceton zum entsprechenden Alkohol, beziehungsweise von aromatischen Ringverbindungen, wie zum Beispiel eines aromatischen Ringsystems (Phenol) zum entsprechenden Cyclohexanon auf als der bekannte Standardkatalysator H 213 B/D 5 % Ru der Degussa-Hüls AG.

Überraschenderweise kann erfindungsgemäß gezeigt werden, dass ein auf einem sprühpyrolytisch hergestellten Aluminiumoxid nach bekannten Methoden präparierter Rutheniumkatalysator nur eine zu den bekannten Standardsystemen vergleichbare Hydrieraktivität aufweist.

Gegenüber dem erfindungsgemäßen, durch Sprühpyrolyse hergestellten RuO$_x$/Al$_2$O$_3$-Katalysator zeigt dieser nach bekannten Präparationsmethoden hergestellte Vergleichskatalysator eine um den Faktor 3 geringere Aktivität in der Niederdruckhydrierung von Phenol, beziehungsweise Aceton.

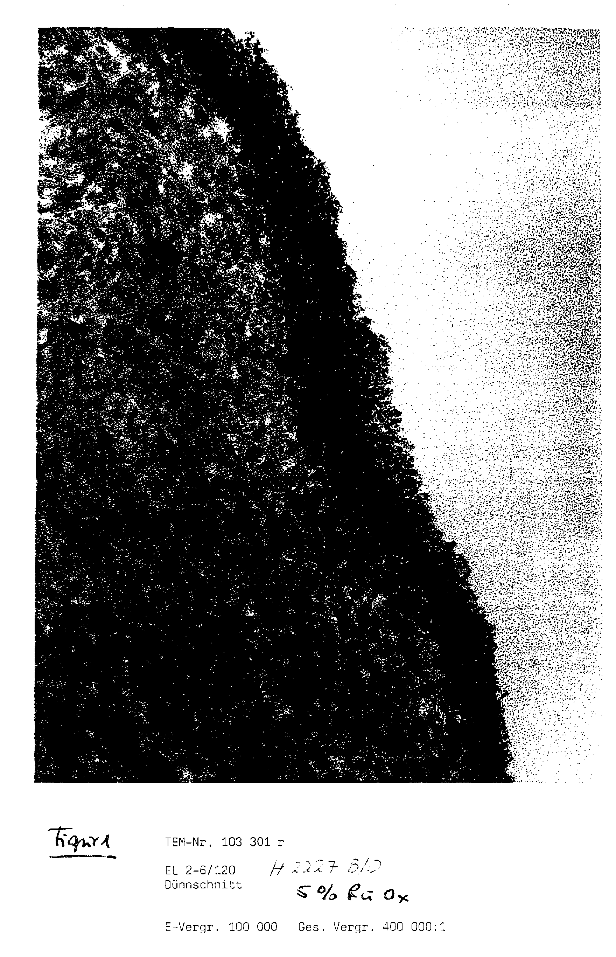

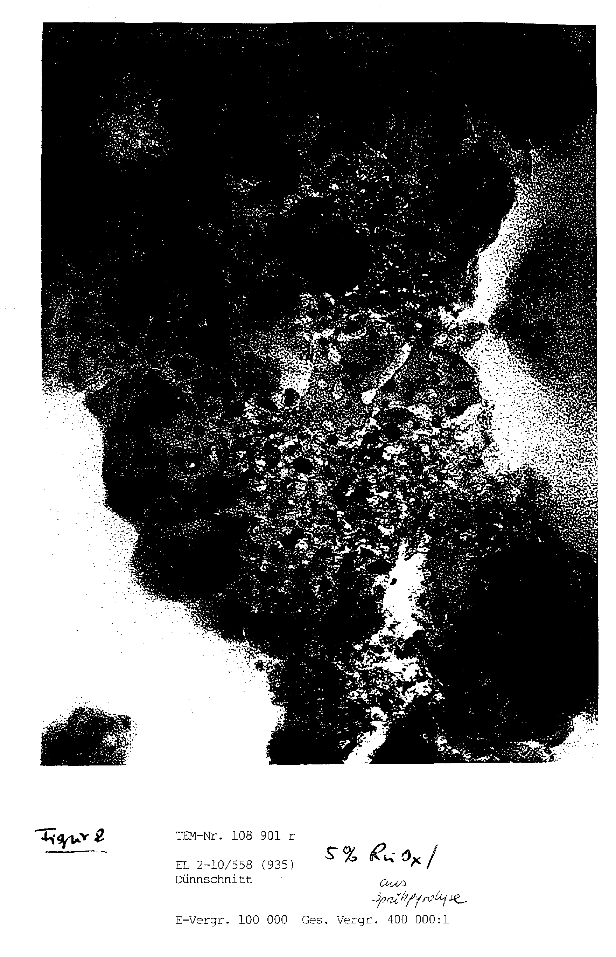

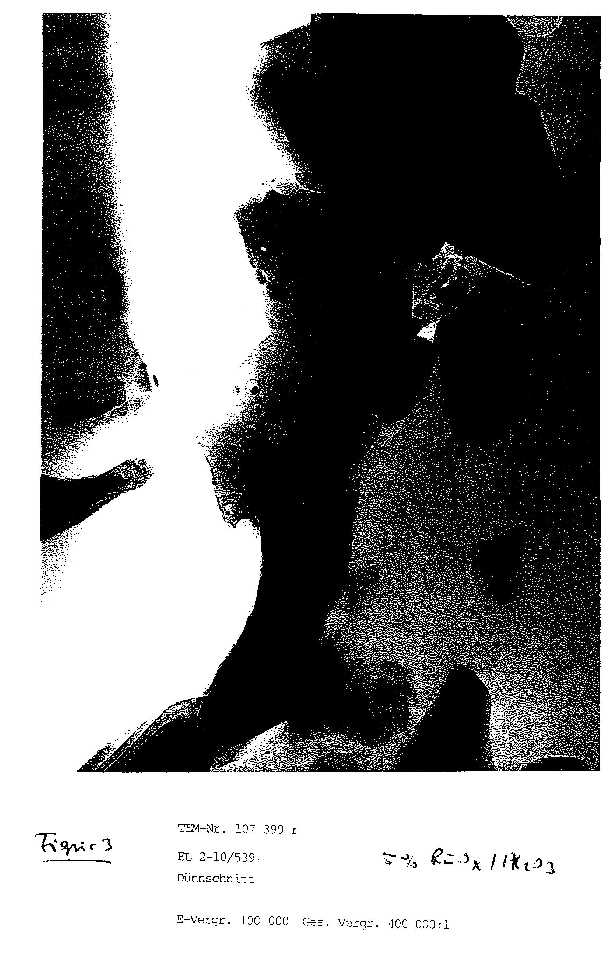

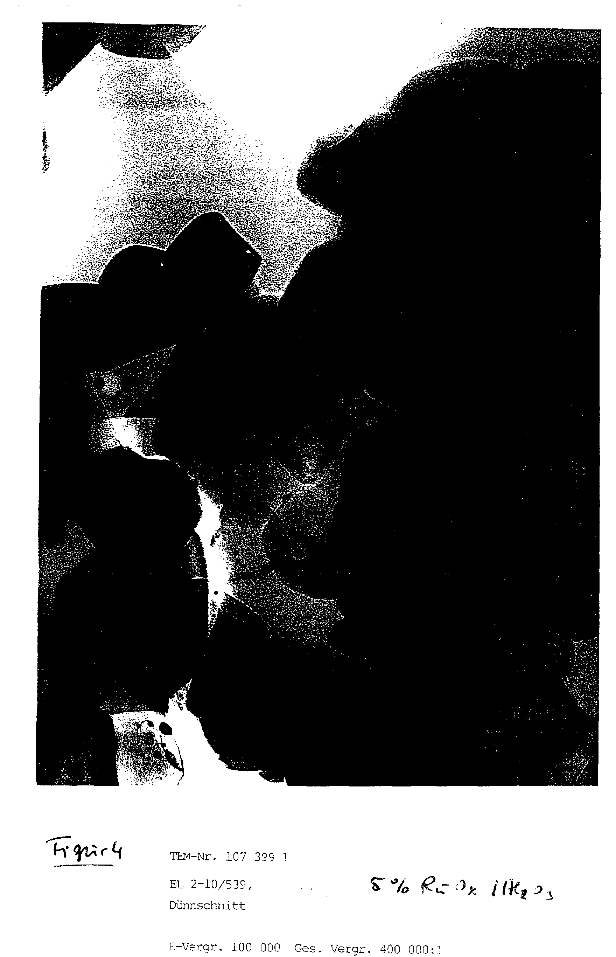

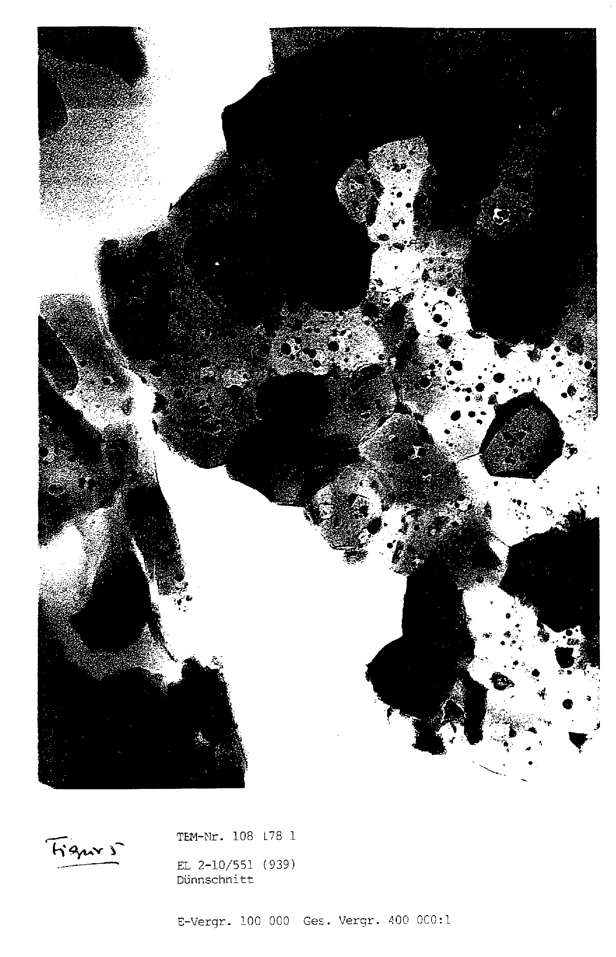

Vermutlich kann die erhöhte Aktivität der erfindungsgemäßen sprühpyrolytisch hergestellten Edelmetallkatalysatoren auf eine hohe Dispersion des Metalls durch idealen Einbau des Rutheniums in das Aluminiumoxidgitter erklärt werden. Die hohe Makroporosität des durch Sprühpyrolyse hergestellten Ru/Al$_2$O$_3$-Katalysators und die daraus resultierende, extrem gute Zugänglichkeit der RuO$_x$-Kristallite können ebenfalls als Begründung für die erhöhte Aktivität in der katalytischen Hydrierung angeführt werden. Schließlich zeigen die TEM-Aufnahmen (Transmissions-Elektronen-Mikroskop-Aufnahmen) des erfindungsgemäßen RuO$_x$/Al$_2$O$_3$-Katalysators eine extrem hohe Dispersion des Edelmetalls und gleichmäßig homogene Verteilung des Rutheniums im Trägerkorn (siehe Figuren 1 bis 5).

Die Verbindung von sehr hoher Makroporosität des Trägers und guter Zugänglichkeit der katalytisch aktiven Zentren führt ebenfalls zu einer deutlichen Erhöhung der katalytischen Aktivität.

Die XPS-Untersuchungen (Photoelektronen-Röntgen-Spektroskopie) an dem erfindungsgemäßen RuO$_x$/Al$_2$O$_3$-Katalysator zeigen eine sehr niedrige Oberflächenkonzentration des Rutheniums (Faktor 4 bis 5 geringer als bei dem zum Vergleich herangezogenen Standardkatalysator H 213 B/D 5 % Ru) auf dem Träger. Dies steht im Einklang mit der sehr guten Dispersion des Rutheniums, dem Einbau von Ruthenium in das Gitter des $\alpha$-$Al_2O_3$.

Die bei dem bekannten Standardkatalysator gefundene relativ niedrigen Edelmetalldispersion und die geringe Eindringtiefe in das Trägerkorn zeigen dagegen eine hohe Edelmetallkonzentration an der Oberfläche des Trägerkorns.

Erfindungsgemäß können alle Metalle des Periodensystems in das Wirtsgitter eines oxidischen Trägermaterials eingebaut werden. Wegen ihrer hohen katalytischen Aktivität in chemischen Reaktionen werden vor allem Edelmetalle - wie Platin, Palladium, Rhodium, Ruthenium oder Iridium - bevorzugt verwendet. Es können Dotierungen eines oxidischen Trägers mit Edelmetall in der Größenordnung zwischen 0.1 und 80 Gew.-% realisiert werden. Man erhält durch das erfindungsgemäß verwendete flammenpyrolytische Verfahren katalytisch aktive Edelmetallkatalysatoren mit einer hochdispersen, nanostrukturierten Edelmetallverteilung von kleiner 50 nm. Besondere Bedeutung kommt der erfindungsgemäß beschriebenen flammenpyrolytischen Methode bei der Morphologie, Porosität und Partikelgrößenverteilung des katalytisch aktiven Edelmetallkatalysator edelmetalldotierten Oxids zu. So werden nach der erfindungsgemäß beschriebenen flammenhydrolytischen Methode ausschließlich makroporöse (Porenradius > 30 nm) Hochtemperaturmodifikationen der Oxide des Aluminiums, Siliziums oder Titans mit Partikelgrößenverteilungen zwischen 0.5 und 50 μm erhalten. Dies ist für die Anwendung in der katalytischen Hydrierung im diskontinuierlich oder kontinuierlich betriebenen Rührkessel von großem Vorteil. Die erfindungsgemässen pulverförmigen Edelmetallkatalysatoren lassen sich sehr einfach durch Verwendung handelsüblicher Filtersysteme (zum Beispiel Fundabal-Kerzenfilter) nach der Reaktion von den Produkten abtrennen.

Die Bildung der Hochtemperaturmodifikation bei der sprühpyrolytischen Herstellung des erfindungsgemässen Edelmetallkatalysators bewirkt desweiteren ein hohes Maß an Stabilität des Trägers gegenüber aggressiven Reaktionsmedien (zum Beispiel Säuren und Laugen) auch bei erhöhten Reaktionstemperaturen, beziehungsweise -drücken.

Die Tabelle 1 belegt zudem den extrem hohen Makroporenanteil (Porenradius Makroporen > 30 μm) am Gesamtporenvolumen der erfindungsgemäßen Edelmetallkatalysatoren. Dies ist in der diskontinuierlich, beziehungsweise kontinuierlich durchgeführten Flüssigphasenhydrierung von besonderem Vorteil, da auch die Diffusion von Reaktanden mit großem kinetischen Durchmesser an das katalytisch aktive Zentrum sehr einfach möglich ist. Dies minimiert die Stofftransportlimitierung in den Poren und erlaubt die effiziente Hydrierung auch sterisch anspruchsvoller Moleküle.

**Beispiel 1:** Herstellung des erfindungsgemäßen Edelmetallkatalysators

Eine angesäuerte wässrige Trinitratonitrosylruthenium II / Aluminiumnitrat-Lösung in einer Gesamtkonzentration von ca. 2,0 - 10 Gew.-% wird mittels handelsüblicher Zweistoffdüse zerstäubt. Die entstandenen Tropfen werden mit Hilfe eines Trägergases in den Reaktor geführt. Zwischen der handelsüblichen Zweistoffdüse und dem Reaktoreingang befindet sich eine 200 mm lange Strecke, die auf 100 °C Außentemperatur geheizt wird. Reaktorlänge: 1000 mm, mittlere Weite: 125 mm, Aerosoldüse im Reaktor: d = 6 mm, $H_2$-Ringdüse von 52 - 54 mm, Luft-Ringdüse von 61 auf 80 mm. Der Reaktor enthält 5 Temperaturmeßsonden. Als Brennergas wird $H_2$ verwendet ($H_2$-Luft Flamme: $T_{max.}$ = 2045 °C.

Für die Herstellung der verschiedenen Katalysatoren variieren die Temperaturen im Reaktor zwischen 830 und 1060 °C am Messpunkt 1. Danach kann die Temperatur im Flammenreaktor bis zum Messpunkt 3 auf Temperaturen zwischen 760 und 510 °C absinken. Das entstandene Produkt wird mittels Filter vom Gasstrom abgetrennt. Die genauen Herstellbedingungen der Muster 1 - 4 sind in der Tabelle 2 aufgeführt. Die Verweilzeiten sind in der Tabelle 3 aufgeführt.

Die analytischen Daten befinden sich in Tabelle 4.

Tabelle 1: Analytische Daten von Beispiel 1 und den drei Vergleichsbeispielen

| Katalysator | BET-Oberfläche Träger [m²/g] | Makroporen-volumen [m²/g] | Gesamt-poren-volumen [m²/g] | Kristallgitter laut XRD | $D_{50}$-Wert Träger [µm] | Ru-Gehalt wt [%] | $RuO_x$-Kristallitgröße [nm] | Ru-Konzentration aus der Oberfläche [%] [Ru $3p_{3/2}$] aus XPS | Edelmetall-verteilung aus TEM |
|---|---|---|---|---|---|---|---|---|---|
| Beispiel 1 | 7,75 | 3,44 | 3,45 | $\alpha\text{-}Al_2O_3$ | 20 | 5 | 39 | 0,8 | Homogen durchimprägniert |
| Vergleichs-beispiel 1 | 100 | 0,35 | 1 | $\gamma\text{-}Al_2O_3$ | 26 | 5 | amorph | 4,1 | Schalen-Katalysator |
| Vergleichs-beispiel 2 | 5 | 0,25 | 0,26 | $\alpha\text{-}Al_2O_3$ | 107 | 5 | amorph | 3,8 | Schalen-Katalysator |
| Vergleichs-beispiel 3 | 197 | 0,4 | 0,68 | Böhmit (AlO(OH)) | 41 | 5 | amorph | 4,6 | Schalen-Katalysator |

## Tabelle 2

Herstellparameter der $RuO_x/Al_2O_3$-Katalysatoren mittels Flammenpyrolyse; als Eduktlösung wird in den Fällen der Muster 1 – 4 eine Trinitratonitrosylruthenium II/Al$(NO_3)_3$-Lösung eingesetzt; bei Muster 5 wurde reines $Al_2O_3$ mit einer Al$(NO_3)_3$-Lösung als Eduktlösung hergestellt (nur der Träger)

| Name | Durchsatz [g/h] | Konz. [Gew.-%] | Kern-Luft [NI/h] | Kern-$N_2$ [NI/h] | Ring-$H_2$ [NI/h] | Außenring Luft [NI/h] | Außenring $O_2$ [NI/h] | Außenring $N_2$ [NI/h] | Quench $N_2$ [NI/h] | Lambda [$O_2/2H_2$] |
|---|---|---|---|---|---|---|---|---|---|---|
| Muster 1 | 350 | 2,4 | 1900 | 600 | 1300 | 700 | 350 | 400 | 0 | 1,38 |
| Muster 2 | 400 | 2,5 | 1900 | 600 | 1300 | 700 | 350 | 0 | 400 | 1,38 |
| Muster 3 | 450 | 2,4 | 2000 | 800 | 1350 | 800 | 350 | 0 | 0 | 1,4 |
| Muster 4 | 450 | 2,4 | 2000 | 800 | 1600 | 1000 | 450 | 0 | 0 | 1,35 |
| Muster 5 | 360 | 4 | 2000 | 600 | 1500 | 1000 | 500 | 0 | 0 | 1,5 |

Erläuterungen:
Kern-Luft = Luftmenge, die aus dem Zentralrohr strömt
Kern-$N_2$ = Stickstoffmenge, die aus dem Zentralrohr strömt
Ring-$H_2$ = Wasserstoffmenge, die durch den inneren Ringspalt strömt
Außenring-Luft = Luftmenge, die durch den äußeren Ringspalt strömt
Außenring-$N_2$ = Stickstoffmenge, die durch den äußeren Ringspalt strömt
Quench-$N_2$ = Stickstoffmenge, die zum quenchen (abkühlen) verwendet wird.

EP 1 190 768 A1

Tabelle 3

| Verweilzeiten im Flammenrohr | |
|---|---|
| Name | Verweilzeit im Flammenrohr [s] |
| Muster 1 | 2,1 |
| Muster 2 | 2,3 |
| Muster 3 | 2,0 |
| Muster 4 | 1,9 |
| Muster 5 | 2,0 |

Tabelle 4

Analytische Daten

| Name | BET-Oberfläche [m²/g] | Mikroporen [ml/g] | Mesoporen [ml/g] | Makroporen [ml/g] | Kristall-gitter $Al_2O_3$ | Schüttdichte [g/cm³] | $RuO_x$-Kristallit-größe [Å] | Cilas $d_{10}$-$d_{90}$ [µm] $d_{50}$ [µm] |
|---|---|---|---|---|---|---|---|---|
| Muster 1 | 8,4 | / | 0,01 (±0,002) | 2,71 (±0,2) | alpha-$Al_2O_3$ | 2,45 | 300 | 2,12-51,74 19,58 |
| Muster 2 | 7,8 | / | 0,01 (±0,002) | 2,03 (±0,2) | alpha-$Al_2O_3$ | 1,73 | 370 | 3,41-53,22 18,04 |
| Muster 3 | 6,0 | / | 0,01 (±0,002) | 2,49 (±0,2) | alpha-$Al_2O_3$ | 2,71 | 500 | 3,87-54,51 20,39 |
| Muster 4 | 7,75 | / | 0,01 (±0,002) | 3,44 (±0,2) | alpha-$Al_2O_3$ | 2,81 | 390 | 4,79-53,67 20,34 |
| H213 B/D 5% 19973568 | 108 | / | 0,35 (±0,002) | 0,68 (±0,03) | delta-$Al_2O_3$ +theta-$Al_2O_3$ | 3,39 | / | $d_{50}$:24,30 |
| Muster 5 (nur Träger) | 5,0 | / | < 0,01 | 2,25 | Amorphes $Al_2O_3$ | | / | 4,02-73,23 29,58 |

Erläuterungen:

alpha-$Al_2O_3$ ist die Hochtemperaturmodifikation des Aluminiumoxids (=Korund);

Gitterstruktur des $Al_2O_3$ und $RuO_x$-Kristallitgröße sind den XRD-Aufnahmen zu entnehmen;

Cilas-Messung: Granulometer HR 850-B;

Mikroporenbestimmung; t_plot nach de Boer;

Mesoporenbestimmung; BJH-Verfahren Din 66134

Makroporen: Hg-Intrusion, Din 66133

EP 1 190 768 A1

Vergleichsbeispiel 1:

Herstellung des Standardkatalysators (H 213 B/D 5 % Ru)

Als Vergleichskatalysator wird ein kommerziell erhältliches Standardprodukt der Degussa-Hüls AG, Geschäftsbereich Sivento, Geschäftsgebiet Industriekatalysatoren, Produktbereich Chemiekatalysatoren, mit der Bezeichnung H 213 B/D 5 % und der Materialnummer 48.1650.0000.00 verwendet. Dieser Katalysator weist die folgenden Daten auf:

| | Einheiten | Richtwerte |
|---|---|---|
| Ruthenium-Gehalt | % | 5,0 |
| Hydrieraktivität Wasserstoffverbrauch bei der Hydrierung von Aceton | ml/min.g | > 18 |
| Korngrößenverteilung Laser-Beugung | | |
| < 8 | μm | 14 |
| < 16 | μm | 29 |
| < 32 | μm | 65 |
| < 64 | μm | 98 |
| < 128 | μm | 99 |
| D 50 | μm | 26 |

Der Katalysator wird auf einem kommerziell verfügbaren $\gamma$-$Al_2O_3$ mit einer mittleren Korngröße von 26 μm und einem Gesamtporenvolumen von ca. 1 ml/g nach einem industriell etablierten Standardverfahren durch Suspendierung des Trägers in Wasser, Imprägnierung und Hydrolyse der verwendeten Rutheniumsalzlösung sowie anschließender nasschemischer Reduktion hergestellt. Der Katalysator wird nach dem Abtrennen von der Suspension im Vakuum getrocknet.

Vergleichsbeispiel 2:

Herstellung eines Ruthenium Katalysators auf Standard $\alpha$-Aluminiumoxid

Der Katalysator wird gemäß Vergleichsbeispiel 1 hergestellt. Es wird kommerziell verfügbares $\alpha$-Aluminiumoxid als Träger verwendet, das die folgenden physikalisch-chemischen Eigenschaften aufweist:

| | |
|---|---|
| BET-Oberfläche | 5 m$^2$/g |
| Gesamtporenvolumen | 0,26 ml/g |
| Mittlerer Partikeldurchmesser des Trägers | 107 μm |

Die Katalysatorpräparation erfolgt gemäß Vergleichsbeispiel 1, die Edelmetallbeladung beträgt 5 % Ruthenium.

Vergleichsbeispiel 3:

Herstellung eines Ruthenium Katalysators auf einem Aluminiumoxid, das durch Spraypyrolyse hergestellt wurde.

Der Katalysator wird gemäß Vergleichsbeispiel 1 unter Verwendung eines sprühpyrolytisch hergestellten Aluminiumoxids hergestellt. Dabei erfolgt die Herstellung des $Al_2O_3$ durch Spraypyrolyse in Anlehnung an das in Beispiel 1 beschriebene Verfahren zur Herstellung des erfindungsgemäßen $RuO_x$/$Al_2O_3$ Katalysators.
Eine angesäuerte wässrige Aluminiumnitrat-Lösung, in einer Gesamtkonzentration von ca. 2,0 - 10 Gew.-% wird mittels handelsüblicher Einstoff- oder Zweistoffdüse zerstäubt. Die entstandenen Tropfen werden mit Hilfe eines Trägergases in den Reaktor geführt. Zwischen der Einstoff- oder Zweistoffdüse und dem Reaktoreingang befindet sich eine 200 mm lange Strecke, die auf 100 °C Außentemperatur geheizt wird. Reaktorlänge: 1000 mm, mittlere Weite: 125 mm, Aerosoldüse im Reaktor: d = 6 mm, $H_2$-Ringdüse von 52 - 54 mm, Luft-Ringdüse von 61 auf 80 mm. Der Reaktor enthält ($H_2$-Luft Flamme: $T_{max.}$ = 2045 °C) .

Für die Herstellung des $Al_2O_3$-Trägers kann die Temperatur im Reaktor zwischen 830 und 1060 °C am Messpunkt 1 variieren. Danach kann die Temperatur im Flammenreaktor bis zum Messpunkt 3 auf Temperaturen zwischen 760 und 510 °C absinken. Das entstandene Produkt wird mittels Filter vom Gasstrom abgetrennt.

Die genauen Herstellbedingungen zur Herstellung von reinem $Al_2O_3$, also des Musters 5, sind der Tabelle 2 zu entnehmen, Verweilzeiten der Tabelle 3. Diese Herstellbedingungen sind denen der Muster 1 - 4 (Tabelle 1) äquivalent. Trotzdem wird überraschenderweise festgestellt, dass es sich bei Muster 5 um amorphes $Al_2O_3$ handelt. Ohne Ru-Zusatz wird kein $\alpha$- $Al_2O_3$ erhalten.

Der so erhaltene amorphe $Al_2O_3$ Träger weist die folgenden physikalisch-chemischen Eigenschaften auf:

| BET-Oberfläche | $5\ m^2/g$ |
| Gesamtporenvolumen | 2,26 ml/g |
| Mittlerer Partikeldurchmesser | 29,6 μm |

Die Katalysatorpräparation eines 5 Gew.-% beladenen Rutheniumkatalysators auf diesem Träger (amorphes $Al_2O_3$) erfolgt unter Verwendung des in Vergleichsbeispiel 1 erwähnten, industriell etablierten Herstellverfahrens in Suspension. Dabei wird im Vergleich zur Herstellung des Standardkatalysators H 213 B/D 5 % Ru lediglich das dafür verwendete $\gamma$- $Al_2O_3$ Trägermaterial durch den oben beschriebenen, spraypyrolytisch hergestellten Träger (amorphes $Al_2O_3$) ersetzt.

Der so erhaltene Katalysator zeigt, dass sich das amorphe $Al_2O_3$ Trägermaterial während der Katalysatorpräparation in Böhmit (AlO(OH)) umgewandelt hat.

Der so erhaltene Katalysator weist folgende physikalischchemische Eigenschaften auf:

| BET-Oberfläche | $197\ m^2/g$ |
| Gesamtporenvolumen | 0,68 ml/g |
| Mittlerer Partikeldurchmesser | 40,89 μm |

Die Katalysatoren werden hinsichtlich ihrer physikalisch-chemischen Eigenschaften mittels verschiedener analytischer Techniken charakterisiert. Dabei kommen die folgenden analytischen Bestimmungsmethoden zum Einsatz.

| Spezifischer Träger Oberfläche Porenvolumina | BET ($N_2$-Adsorption) |
| | BJH Verfahren DIN 66134, Quecksilber Intrusion DIN 66133 |
| Partikelgrößenverteilung des Trägers | Granulometer HR 850-B |
| Partikelgröße des Ruthenium und Kristallstruktur des Trägers | XRD (Röntgenbeugung) |
| Oberflächenkonzentration des Metalls auf dem Träger | XPS (Photoelektronenspektroskopie) nach DIN Fachbereich Nr. 39 Report; DMA (A 97) National Physic Lab; NMP 816 DIN |
| Edelmetallverteilung auf dem Träger | TEM-Untersuchung (Transmissionselektronenmikroskopie Dünnschnittpräparationsverfahren) |

Die analytischen Daten von Beispiel 1 und den Vergleichsbeispielen 1 bis 3 sind in der Tabelle 1 aufgeführt.

Testung der Katalysatoren in der Hydrierung von Aceton und Phenol

In einem Mehrhalskolben mit Tropftrichter und Begasungsrührer, sowie angeschlossenen Wasserstoff-Massendurchfluss-Controller werden 250 mg eines mit 5 Gew.-% Ru beladenen $RuO_x$/ $Al_2O_3$-Katalysators (Trockengewicht) in 100 ml deionisiertes Wasser suspendiert und 10 ml einer $2,5 \cdot 10^{-2}$ M Natronlauge hinzugegeben. Man rührt die Suspension 60 min bei einer Temperatur von 50 °C, einer Rührgeschwindigkeit von 2000 Upm und einem Wasserstoffüberdruck von 10 mbar gegen den äußeren Luftdruck. Anschließend gibt man für den Test der Carbonylhydrierungsaktivität 10 ml Aceton, beziehungsweise für den Test der Ringhydrierungsaktivität 0,084 mol Phenol gelöst in 20 ml DI Wasser hinzu.

Die Messung der Wasserstoffaufnahme wird anschließend sofort gestartet. Für die Carbonylhydrierung wird 5 min, für die Ringhydrierung 15 min gemessen und anschließend gemäß folgender Formel die spezifische Hydrieraktivität A spez bestimmt:

$$A_{spez.} = \frac{V}{t \cdot mk}$$

A =       Spezifische Aktivität in mL $H_2$/(min·g)
V =       Wasserstoffverbrauch in mL
$M_K$ =     Katalysatorwaage in g
T =       Messzeit in min

Folgende Aktivitätswerte werden als Mittelwerte von Doppelbestimmungen für den erfindungsgemäß hergestellten Katalysator, beziehungsweise die Vergleichskatalysatoren gefunden:

| Katalysator | Spezifische Hydrieraktivität Milliliter Wasserstoff pro Gramm Katalysator und Minute (ml/$H_2$/g Kat. min) | |
|---|---|---|
| | Carbonylhydrierung (Aceton) | Ringhydrierung (Phenol) |
| Beispiel 1 | 220 | 65 |
| Vergleichsbeispiel 1 Standardkatalysator (H 213 B/D 5 % Ru) | 60 | 20 |
| Vergleichsbeispiel 2 Katalysator 5 % Ru auf kommerziellem $\alpha$- $Al_2O_3$ | 34 | 15 |
| Vergleichsbeispiel 3 Katalysator auf spraypyrolytisch hergestelltem $\alpha$-$Al_2O_3$ | 55 | 22 |

**Patentansprüche**

1. Edelmetallkatalysator, **gekennzeichnet durch**

    a) oxidische Makroporöse Phase

    b) nanodisperse Phase an Edelmetalloxid-Kristalliten mit einer Größe von kleiner 50 nm

    c) Partikelgrößenverteilung zwischen 0,5 und 80 nm

    d) Edelmetallgehalt von 0,1 bis 80 Gew.-% an Platin, Palladium, Ruthenium, Iridium und/oder Rhodium und/oder Kombination dieser Elemente

2. Edelmetallkatalysator nach Anspruch 1, **dadurch gekennzeichnet, dass** der Edelmetallkatalysator als zusätzliche Dotierungselemente Fe, Sn, V, Cr, Ti, Mn, Co, Ni, Cu und/oder Bi in einer Konzentration von 0,1 bis 50 Gew.-%, bezogen auf die auf dem Katalysator enthaltende Edelmetallmenge, enthält.

3. Edelmetallkatalysator nach Anspruch 1 oder 2, **dadurch gekennzeichnet, dass** als nanodisperse Phase Ruthenium nanodispers auf/in der oxidischen makroporösen Phase Aluminiumoxid, Siliziumdioxid und/oder Titandioxid in einer Oxidationsstufe zwischen +4 und +8 vorliegt.

4. Edelmetallkatalysator nach Anspruch 3, **dadurch gekennzeichnet, dass** die oxidische makroporöse Phase $\alpha$-$Al_2O_3$ ist.

5. Edelmetallkatalysator nach Anspruch 1, **dadurch gekennzeichnet, dass** er eine sehr hohe Aktivität in der Hydrierung von aromatischen Ringverbindungen und aliphatischen Carbonylverbindungen aufweist.

6. Edelmetallkatalysator gemäß Anspruch 1, **dadurch gekennzeichnet, dass** er mittels Flammenpyrolyse hergestellt ist.

7. Verfahren zur Herstellung des Edelmetallkatalysators gemäß Anspruch 1, **dadurch gekennzeichnet, dass** man eine wässrige Lösung eines Edelmetallsalzes und des Salzes des Trägermaterials zerstäubt und die entstandenen Tropfen pyrolysiert.

8. Verwendung des Edelmetallkatalysators gemäß Anspruch 1 zur Hydrierung.

Figur 1

TEM-Nr. 103 301 r

EL 2-6/120      H 2227 B/D
Dünnschnitt        5 % Ru Ox

E-Vergr. 100 000   Ges. Vergr. 400 000:1

Figur 2

TEM-Nr. 108 901 r

EL 2-10/558 (935)
Dünnschnitt

5% RüOx /
aus
sprühpyrolyse

E-Vergr. 100 000   Ges. Vergr. 400 000:1

Figur 3

TEM-Nr. 107 399 r

EL 2-10/539

Dünnschnitt

E-Vergr. 100 000  Ges. Vergr. 400 000:1

Figur 4

TEM-Nr. 107 399 1

EL 2-10/539,        5 % Ru-O_x / Al_2O_3
Dünnschnitt

E-Vergr. 100 000   Ges. Vergr. 400 000:1

Figur 5

TEM-Nr. 108 178 1

EL 2-10/551 (939)
Dünnschnitt

E-Vergr. 100 000  Ges. Vergr. 400 000:1

# EP 1 190 768 A1

**Europäisches Patentamt**

## EUROPÄISCHER RECHERCHENBERICHT

Nummer der Anmeldung

EP 00 12 0894

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 5 110 779 A (HUCUL DENNIS A) 5. Mai 1992 (1992-05-05) * Spalte 3, Zeile 60 - Spalte 4, Zeile 52 * * Spalte 6, Zeile 1 - Zeile 56; Ansprüche 1-5; Beispiel 1 * | 1-6,8 | B01J23/38 B01J23/46 B01J35/10 B01J37/00 |
| X | EP 1 008 385 A (STANDARD OIL CO OHIO) 14. Juni 2000 (2000-06-14) | 1-6 | |
| Y | * Zusammenfassung * * Absatz '0012! * * Absatz '0021! - Absatz '0022! * * Absatz '0039! - Absatz '0041!; Ansprüche 20-29 * | 1-6 | |
| Y | US 5 591 688 A (BLUM PATRICIA R ET AL) 7. Januar 1997 (1997-01-07) * Spalte 4, Zeile 20 - Zeile 60; Tabelle 1 * | 1-6 | |
| D,A | D. LI ET AL.: "Catalytic properties of sprayed Ru/Al2O3 and promoter effects of alkali metals in CO2 hydrogenation" APPLIED CATALYSIS A: GENERAL, Bd. 172, 1998, Seiten 351-358, XP000989737 * das ganze Dokument * | 6,7 | **RECHERCHIERTE SACHGEBIETE (Int.Cl.7)** B01J |
| A | WO 98 57913 A (HAAS THOMAS ;FREUND ANDREAS (DE); SAUER JORG (DE); TACKE THOMAS (D) 23. Dezember 1998 (1998-12-23) * Seite 6, Zeile 9 - Seite 8, Zeile 12; Beispiel 5 * | 1-3,5,6, 8 | |
| D,A | DE 198 21 144 A (DEGUSSA) 18. November 1999 (1999-11-18) * Ansprüche 1,15; Beispiel 1 * | 1,6,7 | |

-/--

Der vorliegende Recherchenbericht wurde für alle Patentansprüche erstellt

| Recherchenort | Abschlußdatum der Recherche | Prüfer |
|---|---|---|
| DEN HAAG | 7. März 2001 | Veefkind, V |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

18

## EUROPÄISCHER RECHERCHENBERICHT

**Europäisches Patentamt**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | EP 0 845 505 A (DEGUSSA) 3. Juni 1998 (1998-06-03) * Zusammenfassung; Ansprüche 1,6 * | 1,6,7 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| DEN HAAG | 7. März 2001 | Veefkind, V |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03 82 (P04C03)

**ANHANG ZUM EUROPÄISCHEN RECHERCHENBERICHT
ÜBER DIE EUROPÄISCHE PATENTANMELDUNG NR.** EP 00 12 0894

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-03-2001

| Im Recherchenbericht angeführtes Patentdokument | | Datum der Veröffentlichung | Mitglied(er) der Patentfamilie | | Datum der Veröffentlichung |
|---|---|---|---|---|---|
| US 5110779 | A | 05-05-1992 | US | 5028665 A | 02-07-1991 |
| | | | AT | 111110 T | 15-09-1994 |
| | | | BR | 9000066 A | 16-10-1990 |
| | | | CA | 2007317 A | 09-07-1990 |
| | | | DE | 69012151 D | 13-10-1994 |
| | | | EP | 0378104 A | 18-07-1990 |
| | | | JP | 2265647 A | 30-10-1990 |
| EP 1008385 | A | 14-06-2000 | BR | 9907490 A | 16-01-2001 |
| | | | CN | 1264621 A | 30-08-2000 |
| | | | JP | 2000176285 A | 27-06-2000 |
| | | | NO | 996008 A | 09-06-2000 |
| US 5591688 | A | 07-01-1997 | US | 5466652 A | 14-11-1995 |
| | | | BR | 9500736 A | 31-10-1995 |
| | | | CA | 2143042 A | 23-08-1995 |
| | | | CN | 1112460 A | 29-11-1995 |
| | | | EP | 0672453 A | 20-09-1995 |
| | | | EP | 0949000 A | 13-10-1999 |
| | | | FI | 950819 A | 23-08-1995 |
| | | | JP | 8038900 A | 13-02-1996 |
| | | | NO | 950645 A | 23-08-1995 |
| | | | NZ | 270546 A | 20-12-1996 |
| | | | SG | 47363 A | 17-04-1998 |
| | | | ZA | 9501441 A | 21-08-1996 |
| WO 9857913 | A | 23-12-1998 | DE | 19737190 A | 21-01-1999 |
| | | | AU | 7973098 A | 04-01-1999 |
| | | | BR | 9810113 A | 08-08-2000 |
| | | | CN | 1260772 T | 19-07-2000 |
| | | | EP | 0993426 A | 19-04-2000 |
| DE 19821144 | A | 18-11-1999 | BR | 9901526 A | 25-01-2000 |
| | | | EP | 0957064 A | 17-11-1999 |
| | | | JP | 2000061288 A | 29-02-2000 |
| EP 0845505 | A | 03-06-1998 | DE | 19647038 A | 20-05-1998 |
| | | | JP | 10218608 A | 18-08-1998 |
| | | | US | 6074754 A | 13-06-2000 |

EPO FORM P0461

Für nähere Einzelheiten zu diesem Anhang : siehe Amtsblatt des Europäischen Patentamts, Nr.12/82